# EUROPÄISCHE PATENTANMELDUNG

(11) **EP 0 816 854 A1**
(43) Veröffentlichungstag der Anmeldung: **07.01.1998**
(21) Anmeldenummer: 97110617.4
(22) Anmeldetag: 28.06.1997
(51) Int. Cl.: G01P 3/481

(54) **Vorrichtung zur Messung der Drehfrequenz eines rotierenden Fahrzeugrades und Fahrzeugreifen geeignet zur Verwendung darin**

(30) Priorität: 04.07.1996 DE 19626843
(71) Anmelder: Continental Aktiengesellschaft, 30165 Hannover (DE)
(72) Erfinder: von Grünberg, Hubertus, Dr., 30625 Hannover (DE); Becherer, Thomas, Dr., 310171 Hannover (DE); Huinink, Heinrich, 30823 Garbsen (DE); Kleinhoff, Klaus, 31552 Rodenberg (DE)

(57) **Zusammenfassung**

Die Erfindung bezieht sich auf eine Vorrichtung zur Messung der Drehfrequenz eines rotierenden Fahrzeugrades (1),
a) bei der auf einer Umfangslinie des Fahrzeugrades (1) gleichmäßig verteilt Pole (2) angeordnet sind, wobei der Radius besagter Umfangslinie mit R1 bezeichnet sei,
b) bei der weiterhin ein auf die Pole (2) ansprechender Sensor (4) im Abstand R2 zur Rotationsachse (RA) des Fahrzeugrades nicht-rotierend axial so nah an besagter Umfangslinie angeordnet ist, dass die am Sensor (4) vorbei geführten Pole (2) eine Abfolge von Signalen im Sensor (4) erzeugen, wobei 0,9R1 < R2 <1,1R1 ist,
c) die eine Auswerteeinheit (14) enthält, die den zeitlichen Abstand zwischen dem Passieren aufeinander folgender Pole (2) der Umfangslinie erfasst und
d) das Reziprokum des jeweiligen zeitlichen Abstandes mit dem Reziprokum der Anzahl der Pole (2) auf der Umfangslinie multipliziert und dieses Produkt als Maß der Raddrehfrequenz bereit stellt, sei es für eine Anzeigeeinrichtung (36, oder auch ein Tachometer), sei es für eine Schlupfregelung eines Bremssystems (ABS) oder eines Traktionssystems oder sonstiges.
   Um die Qualität der Schlupfregelung zumidest weniger oder überhaupt nicht mehr durch Meßungenauigkeiten zu beeinträchtigen, die aus der Differenz zwischen der Felgendrehfrequenz und der Reifenlaufflächendrehfrequenz infolge der Reifenseitenwandverwindung herrühren, wird erfindungsgemäß vorgeschlagen, dass
e) die Pole (2) sich am oder im Reifen (9) befinden.

## Beschreibung

Die Erfindung geht aus von einer Vorrichtung gemäß dem Oberbegriff des Patentanspruches 1; solche Vorrichtungen sind bekannt und millionenfach im Einsatz für Reifenschlupfregelsysteme, insbesondere zur Vermeidung des gefürchteten Überbremsens.

Unter einem Fahrzeugrad wird im Rahmen dieser Anmeldung die Kombination all der Bauteile verstanden, die - abgesehen von den belastungsabhängigen Deformationen - gegeneinander unverdrehbar aber gegenüber der Radaufhängung zur Rotation bestimmt sind; zu einem Rad gehören also insbesondere der Reifen, die Felge mit Felgenkranz und Felgenschüssel, das Ventil, die Nabe, evt. dort eingebaute Dichtungs- und/oder Sicherungsringe, Bremsscheiben, ABS-Polräder und ggf. Antriebswellen.

Die Erfindung bemüht sich um eine Hebung des Sicherheitsniveaus von Kraftfahrzeugen auf bereiften, insbesondere luftbereiften Rädern, die zumindest in der Längsrichtung Kräfte gegenüber einer Straße oder dergleichen nur durch Reibschluß übertragen können. Zwar wird in den meisten Betriebszuständen der maximal mögliche Reibschluß nicht in Anspruch genommen, doch wo immer es gilt, auf unvorhergesehene Vorkommnisse, zum Beispiel auf ein ins Schleudern geratendes vorausfahrendes Fahrzeug oder auf ein auf die Straße gelaufenes Kind, Gefahren abwehrend zu reagieren, kommt es auf die Erreichbarkeit großer Beschleunigung an, insbesondere mit negativem Vorzeichen, also starkes Bremsen.

Es ist bekannt, daß die Höhe der größtmöglichen Beschleunigung im wesentlichen von dem Reibungsbeiwert zwischen den Reifen und der Straße abhängt. Es ist ferner bekannt, dass dieser Reibungsbeiwert von der Werkstoffpaarung Straße/Reifen, meistens Asphalt/Gummimischung, dem Luftdruck, der Latschlänge und dem Laufflächenprofil und der Witterung beeinflußt wird. Weiterhin ist bekannt, dass der Reibungsbeiwert eine Funktion des Schlupfes ist. Unter Schlupf wird die Differenz Reifenumfangsgeschwindigkeit minus Achsschenkelgeschwindigkeit verstanden, dividiert durch die Achsschenkelgeschwindigkeit.

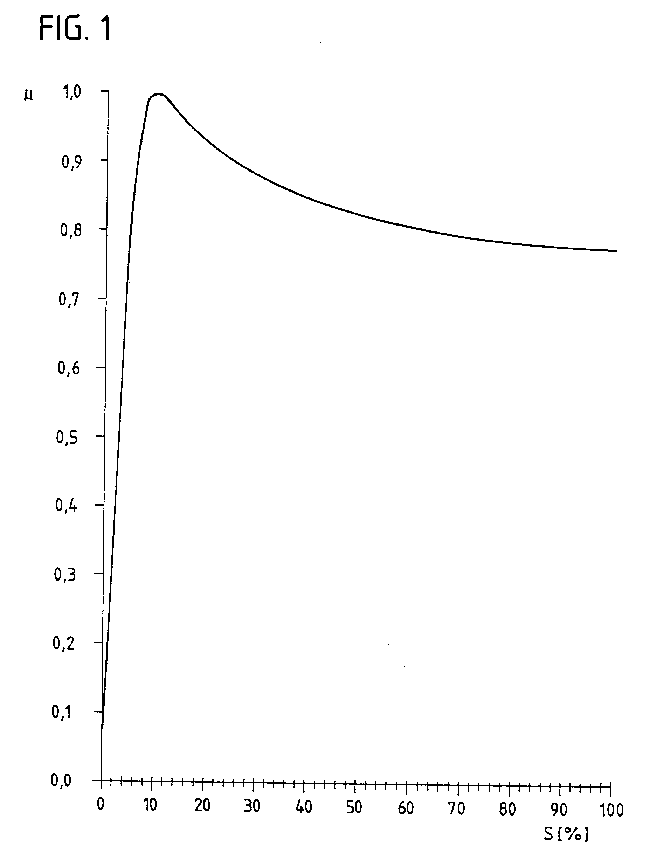

Figur 1 zeigt für die übliche Werkstoffpaarung bei typischen Randbedingungen einen Verlauf des Reibungsbeiwertes µ_{längs} über dem Schlupf, nachfolgend kurz Schlupfkurve genannt. Der maximale Längs-Reibungsbeiwert wird bei einem Schlupfbetrag von etwa 10 % erreicht. Wird der Schlupf noch weiter erhöht, z. B. beim Bremsen durch eine Erhöhung des Bremsmomentes, würde der Reibungsbeiwert und damit die wirksame Längskraft nicht weiter ansteigen sondern im Gegenteil abnehmen. Dies würde nicht nur zur sofortigen Abnahme der Bremsverzögerung führen sondern überdies - bei Aufrechterhaltung des zu hohen Bremsmomentes - zur raschen Abnahme der Raddrehfrequenz und damit der Reifenumfangsgeschwindigkeit bis auf Null, und zwar umso rascher, desto kleiner das Trägheitsmoment des Rades im Verhältnis zur Fahrzeugmasse ist. Der Betriebszustand, in dem das Rad nicht mehr rotiert trotz noch bestehender Achsschenkelgeschwindigkeit, wird als "Blockieren" bezeichnet. Der Schlupf beträgt dabei -100 %.

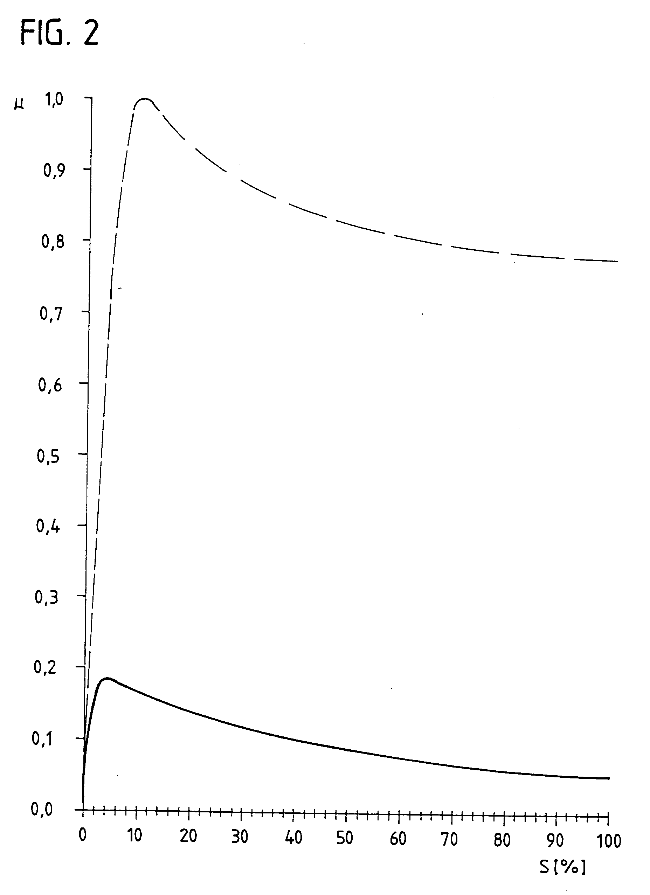

Figur 2 zeigt in duchgezogener Linie die Schlupfkurve für den gleichen Reifen gegenüber kaltem Eis (bei wärmerem Eis ungünstiger) und zum Vergleich in dünn gestrichelter Linie nochmal die Schlupfkurve gemäß Figur 1. µₘₐₓ liegt nicht nur viel niedriger, sondern fällt auch bei kleinerem Schlupf an.

Schon bei geringfügig überhöhtem Bremsmoment läuft die Drehverzögerung des Rades der Fahrzeugverzögerung davon, was das Übel des zunächst nur geringfügig zu großen Bremsschlupfes noch vergrößert: Von beispielsweise -14 % nimmt er rasant auf -100 % betragsmäßig zu. Wegen dieser Wirkung eines Überschreitens des Schlupfes, zu dem der maximale Reibungsbeiwert gehört, wird der Bereich jenseits dieses Schlupfes von den Fachleuten häufig auch als "instabiler Schlupfbereich" bezeichnet; der Schlupfbereich zwischen Null und jenem Werte hingegen wird als stabil bezeichnet. Der Schlupf, zu dem der maximale Reibungsbeiwert gehört, wird auch als der kritische Schlupf bezeichnet.

Der gleiche Sachverhalt gilt auch bei übergroßem Antriebsschlupf. Auch durchdrehende Antriebsräder beeinträchtigen die Fahrzeugsicherheit, wenngleich meistens nicht so gravierend wie blockierend gebremste Räder. Zumindest bei den üblichen ungesperrten Differentialgetrieben bricht die Antriebskraft nicht - wie beim Bremsen - radweise, sondern achsweise ein, weil der größte Teil der Antriebsleistung an das durchdrehende Rad geht. Bei ungesperrten Zwischenachsdifferentialen würde die Antriebskraft sogar fast vollständig zusammenbrechen.

Neben dem Abfall der übertragbaren Längskraft - sowohl beim Blockierbremsen wie auch bei durchdrehenden Antriebsrädern - ist die Fahrzeugsicherheit in solchen Betiebszuständen durch den - im Falle des Blockierbremsens vollständigen - Verlust der Fähigkeit, Seitenkräfte zu übertragen, beeinträchtigt. Zur Kursstabilität trägt deshalb im wesentlichen nur noch die translatorische Massenträgheit und das Massenträgheitsmoment um die Fahrzeughochachse bei; Lenkmanöver sind unmöglich.

Wegen der großen Bedeutung der Einstellung des richtigen Schlupfes beim Erfordernis größtmöglicher positiver oder negativer Beschleunigung und wegen der Tatsache, daß ein Mensch als Regler üblicherweise nur - wie beim Motorrad - maximal zwei Räder gleichzeitig im optimalen Schlupfbereich zu halten vermag, bei allen anderen Kraftfahrzeugen einschließlich Flugzeugen in der Regel sogar nur ein Bedienungsorgan für die ganze Vielzahl von Radbremsen vorhanden ist, begann in den vierziger Jahren dieses Jahrhunderts - zunächst für die Bremsanlagen von Flugzeugfahrwerken - die Entwicklung von Schlupfregelsystemen, also von Systemen, wo eine technische Vorrichtung die Funktion des Regelns dem Menschen abnahm. Bei Verwendung solcher Systeme gibt der Mensch durch die Dosierung eines Hebeldruckes oder Hebelweges oder Pedaldruckes oder Pedalweges oder dergleichen nur noch seinen Willen zur Bemessung der Sollgröße, beispielsweise der Bremsbeschleunigung, kund.

Dem Regelsystem hingegen wird die Aufgabe übertragen, für jedes Rad individuell den günstigsten Schlupf einzustellen. Die meisten Schlupfregelsysteme treten erst in Funktion, wenn an einem Rad nahezu der kritische Schlupf erreicht ist; durch Verhinderung eines weiteren Anstieges des Brems- bzw. Antriebsmomentes wird das Blockieren bzw. Durchdrehen verhindert. Ist der kritische Schlupf mal überschritten worden - zum Beispiel dadurch, daß das Rad plötzlich auf eine schlechtere Reibpaarung gerät wie Blaubasalt oder dergleichen - vermindert das Regelsystem das Brems- bzw. Antriebsmoment so weit und so lange, bis sich der Schlupf wieder knapp unter dem kritischen Schlupf einstellt.

Schlupfregelvorrichtungen werden seit etwa 9 Jahren in der Serienfertigung von PKW, LKW und Anhängern eingesetzt mit weiter steigendem Marktanteil. Insoweit sie nur den Bremsschlupf regeln, hat sich für sie die Abkürzung "ABS" eingebürgert (von Anti-Blockier-System). Schlupfregelsysteme beweisen ihre Wirksamkeit besonders eindrucksvoll in solchen Fahrsituationen, wo eine Radspur auf einem Untergrunde mit schlechtem maximalem Reibungsbeiwert läuft während eine andere Radspur auf einem Untergrunde mit hohem maximalem Reibungsbeiwert läuft.

Schlupfregelsysteme nach dem Stande der Technik erfassen die aktuelle Drehzahl eines jeden Rades. Dazu ist an jedem Rad ein sogenanntes Polrad in nahezu drehstarrer Verbindung mit der Felge angeordnet. Dieses Polrad enthält in einer Umfangslinie eine Vielzahl von Polen, deren Passieren vorbei an einem nicht-rotierend angeordneten Sensor durch Änderung des magnetischen Flusses erkannt wird. Aus der Zeitspanne zwischen dem Passieren zweier aufeinander folgender Pole des Polrades berechnet der Mikrocomputer der Auswerteeinheit die Raddrehzahl (=Raddrehfrequenz). Dazu wird das Reziprokum dieser Zeitspanne (=zeitlicher Abstand) mit dem Reziprokum der Anzahl der Pole auf der Umfangslinie multipliziert. Nach Multiplikation der so ermittelten Raddrehfrequenz mit dem gespeicherten Abrollumfang ergibt sich die Reifenumfangsgeschwindigkeit. Aus diesen Daten berechnet die Auswerteeinheit (bisweilen auch als elektronisches Steuergerät bezeichnet) ferner die Änderung der Raddrehzahl oder der Reifenumfangsgeschwindigkeit über der Zeit.

In der DE 44 35 160 A1 wurde in Spalte 2, Zeile 26, bereits darauf hingewiesen, daß die auf den Reifen wirkende Umfangskraft zu einer Verdrehung des Gürtels und der Lauffläche gegenüber der Felge und damit drehsteif verbundenen Teilen, insbesondere dem ABS-Polrad kommt. In der gesamten Verdrehkette Reifenlauffläche, Gürtel, Reifenseitenwand, Reifenwulst, Felgenhorn, Felgenbett, Felgenschüssel, Befestigungsschrauben, Radnabe, Polrad liegt die mit Abstand größte Verdrehweichheit in der Reifenseitenwand.

Mit den bisherigen Vorrichtungen zur Messung der Drehfrequenz eines rotierenden Fahrzeugrades wird also, so haben die Erfinder erkannt, genau genommen die Drehfrequenz nur des Polrades des Fahrzeugrades bestimmt; diese stimmt aufgrund der sehr drehsteifen Verbindung zwar sehr genau mit der Drehfrequenz der Bremstrommel oder Bremsscheibe des Rades überein, insbesondere in Phasen einer Beschleunigungsänderung jedoch nicht mit der Drehfrequenz der Reifenlauffläche, auf deren Schlupf zur Straße es letztlich ankommt. Die Erfinder haben ferner erkannt, dass die an sich bekannten ABS-Systeme besser funktionieren, wenn sie zusätzlich zu oder - bevorzugt - anstelle der Drehfrequenz der Bremstrommel bzw. -scheibe die Drehfrequenz der Reifenlauffläche erfassen. Dabei wird das Vorurteil überwunden, dass es überhaupt eine einzige Drehfrequenz eines Rades gibt; vielmehr gibt es nach der Erkenntnis der Erfinder im wesentlichen zwei Drehfrequenzen, nämlich die der Reifenlauffläche und des darunter befindlichen Gürtelpaketes einerseits und die der Felgenteile, Radnabe, Dichtungsringe und des Polrades andererseits.

Entsprechend dieser Erkenntnis schlagen die Erfinder eine solche Vorrichtung zur Messung der Drehfrequenz eines rotierenden Fahrzeugrades vor, bei der auf einer Umfangslinie des Fahrzeugreifens in der Nähe seines Gürtels - vorzugsweise gleichmäßig verteilt - Pole (die auch als Geberelemente oder Marken bezeichnet werden) angeordnet sind, wobei der Radius besagter Umfangslinie mit R bezeichnet sei, bei der weiterhin in an sich bekannter Weise ein auf die Pole ansprechender Sensor etwa mit dem Abstand R zur Rotationsachse des Fahrzeugrades nicht-rotierend in der Nähe besagter Umfangslinie angeordnet ist, sodass die am Sensor vorbei geführten Pole eine Abfolge von Signalen im Sensor erzeugen. Weiterhin muss die erfindungsgemäße Vorrichtung in an sich bekannter Weise eine Auswerteeinheit enthalten, die den zeitlichen Abstand zwischen dem Passieren aufeinander folgender Pole der Umfangslinie erfasst und das Reziprokum des jeweiligen zeitlichen Abstandes mit dem Reziprokum der Anzahl der Pole auf der Umfangslinie multipliziert und dieses Produkt als Maß der Raddrehfrequenz bereit stellt.

Eine solche Vorrichtung ist insbesondere zur Verwendung in einem Reifenschlupfregelsystem gedacht; die Erfinder haben ferner erkannt, dass eine solche Vorrichtung zur Messung der Raddrehfrequenz auch geeignet ist zur Einspeisung in eine Anzeigeeinrichtung (Tachometer).

Der wichtigste Unterschied der erfindungsgemäßen Lösung zu den bekannten Drehfrequenzmeßvorrichtungen in Reifenschlupfregelsystemen besteht also darin, dass sich die Pole am oder im Reifen befinden.

Ein weiterer Unterschied kann gemäß Anspruch 5 darin liegen, dass die im Reifen angeordneten Pole ungleichmäßig über dem Umfang verteilt sind; dann muss die Auswerteeinheit die Winkelabstände zwischen allen aufeinander folgenden Polen gespeichert enthalten oder sich selber durch statistische Auswertung ermitteln und speichern und das Reziprokum des jeweiligen zeitlichen Abstandes zwischen dem Passieren aufeinander folgender Pole mit dem Verhältnis des jeweiligen Winkels zwischen den jeweilig aufeinander folgenden Polen zum Vollwinkel multiplizieren und dieses Produkt als Maß der Raddrehfrequenz bereit stellen.

Der Kern der Erfindung ist die Anordnung der Pole am Reifen und zwar vorzugsweise soweit radial außen, dass diese Pole praktisch drehstarr mit der Reifenlauffläche verbunden sind. Hierdurch werden Messdaten ermittelt und ausgewertet, die wesentlich besser mit dem hauptsächlich Interessierenden korrelieren, nämlich dem Reifenschlupf. Zur Verwirklichung einer solchen Vorrichtung sind Reifen gemäß Anspruch 7 erforderlich.

Nach Anspruch 2 wird eine solche Anordnung der Pole in der Axialen bevorzugt, dass sich die Pole in der Nähe der Gürtelkanten befinden. Hier ist nämlich die Anordnung von Polen besonders leicht möglich und die Übertragungswege zu einem im Radkasten angeordneten Sensor sind kleinstmöglich. Zur Verwirklichung einer solchen Vorrichtung sind Reifen gemäß Anspruch 8 erforderlich.

Vorzugsweise bewirken gemäß Anspruch 3 die im Reifen angeordneten Pole in an sich bekannter Weise eine Änderung der magnetischen Fiussdichte gegenüber ihrer Umgebung und der Sensor spricht auf diese Änderungen der magnetischen Flussdichte an.

Die Beibehaltung des letztgenannten Merkmales ermöglicht zusammmen wirkend mit den erfindungsgemäßen Merkmalen einer einzigen Polspur am Reifen und der Zeitspannenermittlung von Pol zu Pol der selben Polspur eine besonders einfache Ausbildung der Pole, nämlich eine gemäß Anspruch 9. Demgemäß ist eine der Gürtelkanten in der Weise "ausgefranst", dass - vorzugsweise in regelmäßigen Abständen - einzelne Gürteldrähte oder Gürtelseile weiter zum Sensor hin reichen als der oder die jeweils davor und dahinter befindliche(n) Gürteldraht bzw. -drähte bzw. -seil bzw. -seile; diese weiter zum Sensor hin reichenden Enden einzelner Gürteldrähte oder -seile dienen als Pole. So sind am Reifen keine zusätzlichen Bauteile erforderlich. Eine solche Weiterbildung der erfindungsgemäßen Lösung empiehlt sich insbesondere im Zusammenspiel mit nicht-metallischen und deshalb nicht abschirmenden Karkassen, wie sie im Bau von PKW- und LLKW-Reifen üblich sind.

Zwecks Verstetigung der Steifigkeitsverteilung und zum Abbau von Schubspannungskonzentrationen ist eine solche ausgefranste Gürtelkantenausbildung nicht nur ohne Nachteil für den Reifen sondern sogar von Vorteil; dies erleichtert die Rechtfertigung des höheren verfahrenstechnischen Aufwandes zur Ausbildung dieser einen der Gürtelschnittkanten. Es versteht sich, dass zweckmäßigerweise die Gürtellage, die sich von der axialen Reifenmitte aus gesehen am weitesten nach axial außen erstreckt, ausgefranst ausgebildet wird. Bei seitengebundenen Reifen reicht es überdies aus, diese Gürtelkantenausbildung auf der fahrzeuginneren Seite vorzusehen, also dort, wo in der Regel der Sensor angeordnet sein dürfte.

Sobald Sensoren zur Verfügung stehen, die eine wesentlich bessere Auflösung bieten als die derzeit üblichen, kann diese Lösung noch besser und gleichzeitig billiger ausgebildet werden, indem nämlich nicht mehr die verlängerten Festigkeitsträger im Kontrast zu den nicht verlängerten erfasst werden, sondern jeder Festigkeitsträger der axial am weitesten nach außen reichenden Gürtellage im Kontrast zum dazwischen befindlichen Gummi; die Zeitintervalle, über die als Mittelwert jeweils die Raddrehfrequenz ermittelt wird, würden so viel kürzer, die Messwerte also aktueller, und nicht zuletzt bedürfte es keiner Ausfransung einer Gürtelkante mehr.

Die Erfindung würde sich also dann darauf reduzieren, einen an sich bekannten Sensor eines an sich bekannten ABS-Systems oder dergleichen - unter neuartiger Vermeidung eines Polrades oder dergleichen - neuartigerweise in einem soweit radial äußeren Bereich des Reifens anzuordnen, dass der radiale Abstand r des Sensors von der Rotationsachse um höchstens 10% vom Radius R (ggf. der fahrzeuginneren) der von der axialen Reifenmitte aus gesehen axial äußeren Gürtelkante abweicht und er axial so dicht angeordnet ist, dass er das Passieren jeden einzelnen Festigkeitsträgers (Drahtes oder Seiles) dieser Gürtellage erfaßt.

In Fortführung des Gedankens, unter Vermeidung zusätzlicher Bauteile die Drehfrequenz der Reifenlauffläche und nicht oder nicht nur die der Felge oder damit drehstarr verbundener Teile zu erfassen, ist es unter Verwendung eines Sensors, der auf Änderungen der optischen Reflektion und/oder Absorbtion anspricht, gemäß Anspruch 4 auch möglich, dass die im Reifen angeordneten Pole eine Änderung der optischen Reflektion und/oder Absorbtion gegenüber ihrer Umgebung bewirken und der Sensor auf diese Änderungen der optischen Reflektion und/oder Absorbtion anspricht. Dies ist besonders leicht möglich, wenn einzelne im Sichtbereich des Sensors liegende Stellen des Reifens nicht schwarz sind.

Während bei der DE 44 35 160 A1 stärker abweichend von der derzeitig in Großserie produzierten Technik Zeitspannen zwischen dem Passieren von Polen auf verschiedenem Radius angeordneter Polspuren gemessen werden, werden bei der hier vorgeschlagenen Lösung - insoweit übereinstimmend mit der derzeitigen Großserientechnik - Zeitspannen zwischen dem Passieren von Polen der selben Polspur gemessen, im Sinne einer einfachen Lösung vorzugsweise einer einzigen Polspur. Der DE 44 35 160 A1 geht es primär um eine Messung des Drehmomentes zwischen dem Reifenwulstbereich und dem Gürtelpaket, der hier vorliegenden Erfindung hingegen um eine Messung der Drehfrequenz (auch) des Gürtelpaketes.

Dem steht nicht entgegen, dass nach bevorzugter Ausführung der Erfindung gemäß Anspruch 6 auch hier eine zweite Polspur vorhanden ist und zwar in möglichst drehstarrer Verbindung zur Felge und Bremstrommel bzw. -scheibe. Mit dieser zweiten Polspur lässt sich in an sich bekannter Weise die Felgendrehfrequenz ermitteln, die insbesondere nach abrupten Änderungen des von der Bremse gelieferten Drehmomentes (durch Änderung des Druckes in der jeweiligen Bremsleitung) oder Änderungen des von der Reifenlauffläche gelieferten Drehmomentes (bei Treffen auf einen Fahrbahnbelag anderen Reibungsbeiwertes) oder infolge (unerwünschter) Drehschwingungen zwischen Felge und damit drehstarr verbundenen Teilen einerseits und Gürtelpaket und damit drehstarr verbundenen Teilen andererseits von der Gürteldrehfrequenz abweichen kann. Die Erfassung und Mitberücksichtigung dieser Unterschiede zwischen beiden Drehfrequenzen ermöglicht deren Minimierung mittels starkem P-Regelverhalten im Verhältnis zu dämpfenden Regelgliedern mit D- und I-Regelverhalten. So können Drehschwingungen zwischen Felge und Gürteipaket auch dann vermieden werden, wenn die Regelung sehr flink ausgelegt ist, also nur schwach dämpfend. Dieses ermöglicht ein extrem nahes Herangehen des Soll-Schlupfwertes an den für den jeweiligen Straßenbelag kritischen Schlupf und damit die größte Beschleunigung.

Unbeschadet der Übereinstimmung letztgenannter, im Sinne höchstmöglicher Leistungsfähigkeit bevorzugter Ausführung der Erfindung bezüglich der Anzahl der Polspuren mit der vorbekannten Lösung gemäß der DE 44 35 160 A1 verbleibt als wesentlicher Unterschied zur DE 44 35 160 A1, dass die hier gelehrte Vorrichtung zuerst die Messwerte beider Polspuren jeweils für sich auswertet, führend zur Angabe der jeweils aktuellen Drehfrequenz, und dann erst diese Ergebnisse verschiedener Polspuren in Beziehung zueinander setzt, während nach der DE 44 35 160 A1 von Anfang an Messwerte beider Polspuren paarweise in Beziehung zueinander gesetzt werden. Dieser Unterschied wird sehr deutlich bei Betrachtung der Auswahlwahrscheinlichkeit:

Fällt nur ein Pol einer Vorrichtung nach der DE 44 35 160 A1 aus, so sind sämtliche Messdaten unbrauchbar; fällt ein Pol einer erfindungsgemäßen Vorrichtung aus, so sind nur die Messdaten der betreffenden Polspur unbrauchbar.

Fällt die Polspur radial außen am Reifen aus, so kann das Schlupfregelsystem immerhin noch so gut arbeiten wie eines der derzeitigen Seriensysteme; fällt die felgenfest angeordnete Polspur aus, so arbeitet das System sogar immer noch etwas besser als eines der derzeitigen Seriensysteme.

Die Erfindung wird nachfolgend anhand von vier Figuren näher erläutert. Es zeigt:
- Fig. 3: einen Schnitt durch eine erfindungsgemäße McPherson-Radaufängung mit einem achsschenkelfest angeordneten Sensor,
- Fig. 4: einen Schnitt durch eine erfindungsgemäße McPherson-Radaufängung ähnlich Figur 3, jedoch mit zwei achsschenkelfest angeordneten Sensoren,
- Fig. 5: eine perspektivische Ansicht eines erfindungsgemäßen Reifens mit freigelegten Gürtelkanten und
- Fig. 6: in Seitenansicht einen erfindungsgemäßen Reifen.

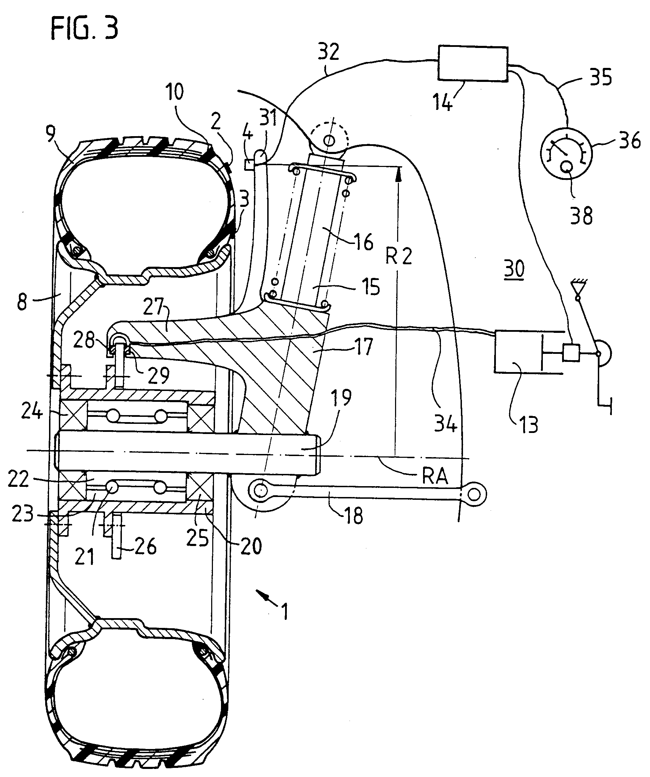

Figur 3 zeigt einen Schnitt durch eine erfindungsgemäße McPherson-Radaufängung mit einem Rad 1, einer Feder 15, einem Federbeinkolben 16 und einer Zylindereinheit 17. Der Kolben 16 ist an seinem oberen Ende mit der Karosserie 30 gelenkig verbunden.

Die Mittellinie des Achsschenkels 19 definiert die Rotationsachse RA. Der Achschenkel 19 ist an seinem fahrzeuginneren Ende fest mit der Zylindereinheit 17 verbunden. Dort greift ein Querlenker 18 an, der mit der Karosserie 30 gelenkig verbunden ist. Der Achsschenkel 19 trägt mittels eines Radlagers 21 eine Radnabe 20. Das Radlager 21 besteht aus einem Innenring 22 und einem Außenring 23 und ist rechts und links mit je einem Dichtring 24, 25 abgedichtet.

An der Radnabe 20 ist die Felge 8 montiert. Sie trägt außen einen Luftreifen 9. Außerdem ist an der Nabe 20 eine Bremsscheibe 26 montiert. Eine Bremszange 27 mit Bremsbelägen 28, 29 greift um die Bremsscheibe 26 herum. Sie (27) ist mit der Zylindereinheit 17 fest verbunden.

An der axial inneren Seite des Reifens 9 ist im radial äußeren Bereich des Reifens in der Nähe der axial äußersten Gürtelkante 10 eine Spur von Polen 2 gezeigt.

Der mit der Bremszange 26 fest verbundene und somit achsschenkelfeste Sensorträger 31 enthält einen Sensor 4, der das Passieren von Polen 2 erfasst.

Passiert ein Pol 2 den Sensor 4, der über einen Draht 32 mit der Auswerteeinheit 14 verbunden ist, wird dort eine - vorzugsweise elektronische, quarzgesteuerte -Stoppuhr gestartet. Wenn der nächste Pol 2 den Sensor 4 passiert, wird die besagte Stoppuhr angehalten und die Zeitspanne zwischen beiden Passiervorgängen gemessen. Vorzugsweise wird gleichzeitig die nächste Stoppuhr gestartet und in analoger Weise gestoppt, sobald der übernächste Pol den Sensor 4 passiert. Das Passieren dieses übernächsten Poles sollte sodann wieder die erste Stoppuhr starten und so fort.

Die Ergebnisse der Auswerteeinheit 14 werden über einen Draht 35 zur Anzeigeeinheit 36 weitergeleitet. Sie (36) ist vorzugsweise im Fahrzeuginneren angeordnet und besteht aus einem ABS-Kontrollämpchen 38. Ferner werden die Ergebnisse der Auswerteeinheit 14 an den Bremszylinder 13 geleitet, der wiederum den dort geregelt erzeugten Druck über eine Bremsleitung 34 letztlich auf die Bremsbeläge 28 und 29 gibt, die wiederum auf die Bremsscheibe 26 wirken.

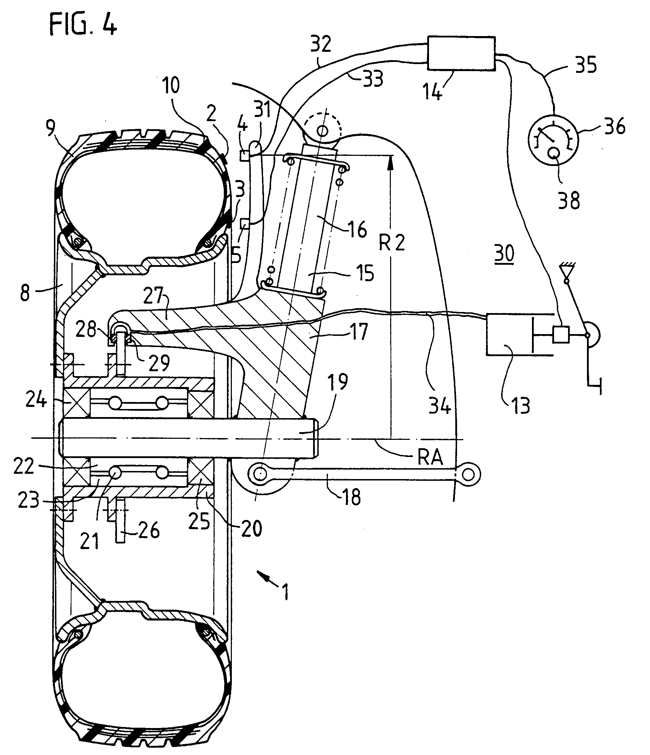

Figur 4 stimmt abgesehen von einem zusätzlichen, felgennah angeordneten weiteren Polspur 3, einem damit zusammenwirkenden weiteren Sensor 5 und weiteren Leitung 33 vom Sensor 5 zur Auswerteeinheit 14 mit Figur 3 überein. Diese weitere Spur von Polen 3 sollte möglichst drehsteif mit der Bremsscheibe 26 verbunden sein; abweichend von der Figur befinden sich deshalb für eine optimale Datenermittlung die Pole 3 auf der Bremsscheibe 26 selber und der auf diese Pole ansprechende Sensor 5 in der Kehle der Bremszange 27. Die tatsächlich gezeigte Anordnung im Reifenwulstbereich ist aber aufgrund der dortigen hohen Steifigkeit nur wenig und zudem reproduzierbar schlechter als erstgenannte nicht-gezeigte Anordnung, hat aber den Vorteil, dass der Fahrzeughersteller in seiner Bremsscheibenaquisition keine Rücksicht auf das Schlupfregelsystem zu nehmen braucht.

Die flinke Erfassung beider Drehfrequenzen ermöglicht ein noch schärferes Betreiben des Bremsregelsystems im Bereich des kritischen Schlupfes, weil ein Übersteuern des Regelsystems - was eine Torsionsschwingung zwischen dem Reifengürtelbereich einerseits und den drehsteif mit der Feige verbundenen Teilen andererseits speisen würde - auch bei geringerer Dämpfung des Regelsystems so noch verhindert werden kann.

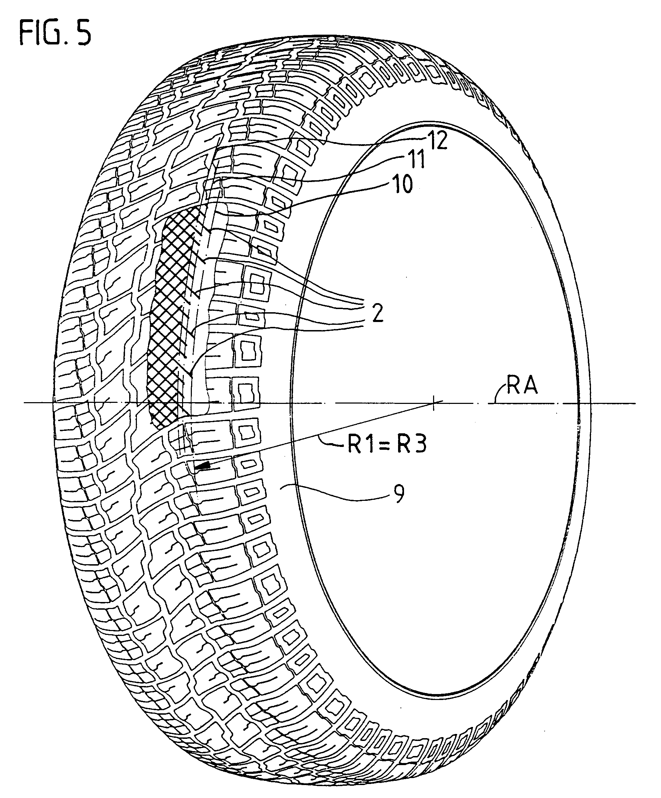

Figur 5 zeigt in perspektivischer Ansicht einen erfindungsgemäßen Reifen 9 mit freigelegten Gürtelkanten 10 und 11 der unteren Gürteilage und 12 der oberen Gürtellage. Von der unteren Gürtellage, die etwas breiter ausgebildet ist als die obere, ist jeder dritte Festigkeitsträger verlängert ausgebildet. Jede dieser Verlängerungen wirkt als Pol 2 im Sinne der Erfindung. Die langen Drähte bilden die Gürtelkante 10, die kürzeren die Gürtelkante 11 und die noch kürzeren der oberen Gürtellage die Gürtelkante 12.

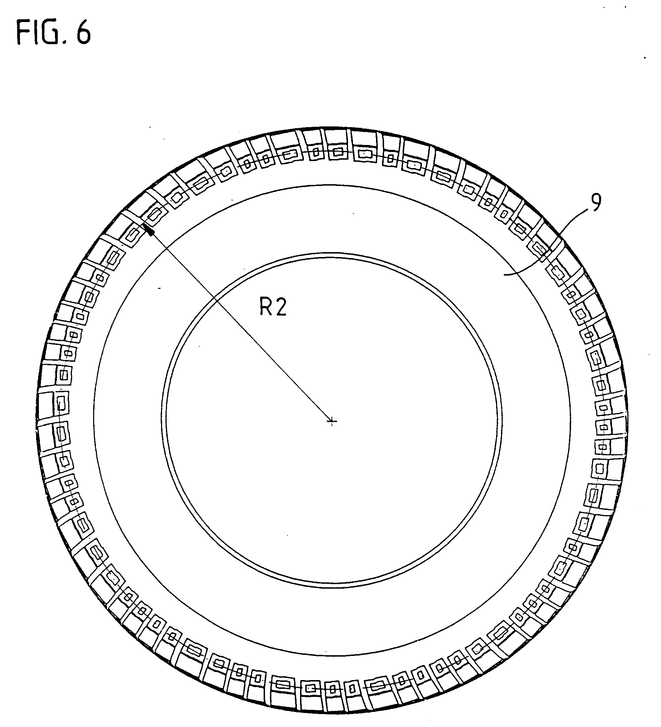

Figur 6 zeigt in Seitenansicht einen erfindungsgemäßen Reifen 9. Im Bereich des Radius R der hier nicht dargestellten Gürtelkanten sind diskrete Positivklötze angeordnet mit einer höher reflektierenden Oberfläche. Dieser Reifen 9 ist für das Zusammenspiel mit einer Lichtquelle und einem Sensor gedacht, wie er in den Figuren 3 und 4 mit dem Bezugszeichen 4 dargestellt ist und der auf unterschiedlich stark oder in unterschiedlicher Farbe reflektiertes Licht hin anspricht. Eine Bezugszeichenliste ist Bestandteil der Beschreibung.

### Bezugszeichenliste

- 1: Rad
- 2: radial außen angeordnete Pole, Spur dieser Pole,
- 3: praktisch verdrehstarr mit Bremsscheibe verbundene Pole, Spur dieser Pole
- 4: äußerer Sensor
- 5: innerer Sensor
- 8: Felge
- 9: Reifen
- 10: axial äußere Gürtelkante unterer Gürtellage
- 11: axial innere Gürtelkante unterer Gürtellage
- 12: Gürtelkante oberer Gürtellage
- 1: 3 Bremszylinder
- 14: Auswerteeinheit
- 15: Feder
- 16: Kolben des McPherson-Federbeines
- 17: Zylindereinheit des McPherson-Federbeines
- 18: Querlenker
- 19: Achsschenkel
- 20: Radnabe
- 21: Radlager
- 22: Innenring von 21
- 23: Außenring von 21
- 24: Dichtring auf Fahrzeugaußenseite
- 25: Dichtring auf Fahrzeuginnenseite
- 26: Bremsscheibe
- 27: Bremszange
- 28: Bremsbelag
- 29: Bremsbelag
- 30: Karosserie
- 31: Sensorträger
- 32: Datenleitung von Sensor 4 zur Auswerteeinheit 14
- 33: Datenleitung von Sensor 5 zur Auswerteeinheit 14
- 34: Bremsleitung von 13 zu Radbremskolben und letztlich 28, 29
- 35: Datenleitung von Auswerteinheit 14 zur Anzeigeeinheit 36
- 36: Anzeigeeinheit
- 38: ABS-Kontrollämpchen
- RA: Rotationsachse
- R1: Radius der Umfangslinie, auf dem die Pole 2 angeordnet sind
- R2: Radius, auf dem der Sensor 4 angeordnet ist
- R3: Radius der Gürtelkante 10

## Patentansprüche

1. Vorrichtung zur Messung der Drehfrequenz eines rotierenden Fahrzeugrades (1),
a) bei der auf einer Umfangslinie des Fahrzeugrades (1) gleichmäßig verteilt Pole (2; auch als Geberelemente oder Marken bezeichnet) angeordnet sind, wobei der Radius besagter Umfangslinie mit R1 bezeichnet sei,
b) bei der weiterhin ein auf die Pole (2) ansprechender Sensor (4) im Abstand R2 zur Rotationsachse (RA) des Fahrzeugrades nicht-rotierend axial so nah an besagter Umfangslinle angeordnet ist, dass die am Sensor (4) vorbei geführten Pole (2) eine Abfolge von Signalen im Sensor (4) erzeugen,
wobei 0,9R1 < R2 <1,1R1 ist,
c) die eine Auswerteeinheit (14) enthält, die den zeitlichen Abstand zwischen dem Passieren aufeinander folgender Pole (2) der Umfangslinie erfasst und
d) das Reziprokum des jeweiligen zeitlichen Abstandes mit dem Reziprokum der Anzahl der Pole (2) auf der Umfangslinie multipliziert und dieses Produkt als Maß der Raddrehfrequenz bereit stellt, sei es für eine Anzeigeeinrichtung (36, oder auch ein Tachometer), sei es für eine Schlupfregelung eines Bremssystems (ABS) oder eines Traktionssystems oder sonstiges,
**dadurch gekennzeichnet,** dass
e) die Pole (2) sich am oder im Reifen (9) befinden.

2. Vorrichtung nach Anspruch 1, dadurch gekennzeichnet, dass sich die Pole (2) in einem soweit radial äußeren Bereich des Reifens (9) befinden, dass 0,9R3 < R1 < 1,1R3 gilt, wobei R3 der Radius der von der Reifenmitte aus gesehen äußersten Gürtelkante (10) ist, vorzugsweise auch in der Axialen in der Nähe der Gürtelkante (10).

3. Vorrichtung nach einem der vorangehenden Ansprüche, dadurch gekennzeichnet, dass die im Reifen (9) angeordneten Pole (2, 3) eine Änderung der magnetischen Flussdichte gegenüber ihrer Umgebung bewirken und der Sensor (4) oder die Sensoren (4, 5) auf diese Änderungen der magnetischen Flussdichte anspricht bzw. ansprechen.

4. Vorrichtung nach Anspruch 1 oder 2, dadurch gekennzeichnet, dass die im Reifen (9) angeordneten Pole (2, 3) eine Änderung der optischen Reflektion und/oder Absorbtion gegenüber ihrer Umgebung bewirken und der Sensor (4) oder die Sensoren (4, 5) auf diese Änderungen der optischen Reflektion und/oder Absorbtion anspricht bzw. ansprechen.

5. Vorrichtung nach einem der vorangehenden Ansprüche, vorzugsweise nach Anspruch 4, dadurch gekennzeichnet, dass - abweichend von Merkmal a) des Anspruches 1 - die im Reifen (9) angeordneten Pole ungleichmäßig über dem Umfang verteilt sind und die Auswerteeinheit die Winkelabstände zwischen allen aufeinander folgenden Polen (2) gespeichert enthält oder sich selber durch statistische Auswertung ermittelt und speichert und das Reziprokum des jeweiligen zeitlichen Abstandes zwischen dem Passieren aufeinander folgender Pole (2) - abweichend von Zeile 2 des Merkmales d) des Anspruches 1 - mit dem Verhältnis des jeweiligen Winkels zwischen den jeweilig aufeinander folgenden Polen (2) zum Vollwinkel multipliziert und dieses Produkt als Maß der Raddrehfrequenz bereit stellt.

6. Vorrichtung nach einem der vorangehenden Ansprüche, zumindest nach Anspruch 2, dadurch gekennzeichnet, dass die Vorrichtung überdies eine solche an sich bekannte Spur von Polen (3) enthält, die drehsteif mit der Feige (8) verbunden sind und die an einem so angeordneten nichtrotierenden Sensor (5) vorbei geführt werden, dass diese Pole (3) eine Abfolge von Signalen im Sensor (5) erzeugen, dass die Vorrichtung in an sich bekannter Weise aus diesen Signalen analog Merkmal d) des Anspruches 1 oder dessen Abwandlung gemäß Anspruch 5 die Felgendrehfrequenz bestimmt und die (im Anspruch 1 als Raddrehfrequenz bezeichnete) Gürteldrehfrequenz mit der Felgendrehfrequenz oder deren Differentiale nach der Zeit miteinander vergleicht.

7. Fahrzeugreifen (9) geeignet zur Verwendung in einer der vorgenannten Vorrichtungen,
**dadurch gekennzeichnet,** daß er Pole (2) enthält.

8. Fahrzeugreifen nach Anspruch 7, dadurch gekennzeichnet, daß sich die Pole (2) im radial äußeren Bereich des Reifens (9) befinden, vorzugsweise in der Nähe der Gürtelkanten.

9. Fahrzeugreifen nach Anspruch 8, geeignet für eine Vorrichtung nach Anspruch 3, dadurch gekennzeichnet, daß ein axiales Gürtelende als zwei Gürtelkanten (10, 11) - quasi "ausgefranst" - ausgeführt ist, wobei - bevorzugt in regelmäßigen Abständen - einzelne Gürteidrähte oder Gürtelseile der einen Gürtelkante (10) weiter zum Sensor (4) hin reichen als der jeweils davor und dahinter befindliche Gürteidraht bzw. -seil der Gürtelkante (11) und diese weiter zum Sensor (4) hin reichenden Enden einzelner Gürteidrähte oder Gürtelseile als Pole (2) dienen.
